# EUROPÄISCHE PATENTANMELDUNG

(11) **EP 4 119 904 A1**
(43) Veröffentlichungstag der Anmeldung: **18.01.2023**
(21) Anmeldenummer: 22184093.7
(22) Anmeldetag: 11.07.2022
(51) Int. Cl.: G01D 21/00, H04L 67/12, H04W 4/38

(54) **SENSORSYSTEM, NETZWERK MIT WENIGSTENS EINEM SENSORSYSTEM UND VERFAHREN ZUM BETRIEB EINES SENSORS**

(30) Priorität: 12.07.2021 DE 102021117918
(71) Anmelder: Fraunhofer-Gesellschaft zur Förderung der angewandten Forschung e.V., 80686 München (DE)
(72) Erfinder: CONRAD, Christian, 66123 Saarbrücken (DE); HERRMANN, Hans-Georg, 66123 Saarbrücken (DE); KOSTER, Dirk, 66123 Saarbrücken (DE)
(74) Vertreter: Rösler, Uwe

(57) **Zusammenfassung**

Beschrieben werden ein Netzwerk mit wenigstens einem Sensor zur Erzeugung wenigstens eines Sensorsignal, das von einer sensorisch erfassbaren Zustandsgröße abhängig ist, sowie einem Mittel zur bidirektionalen Übertragung, wenigstens des Sensorsignals zu einem Rechner-gestützten-Sensorknoten, der Bestandteil des Sensorsystems ist und in dem zumindest eine wissensbasierte Sensorsignalauswertung zum Erhalt wenigstens eines Auswerteergebnisses sowie eine Ermittlung wenigstens eines Steuersignals auf Basis des Auswerteergebnisses erfolgt, das das Mittel an den Sensor zu dessen Sensorbetrieb überträgt.

## Beschreibung

### Technisches Gebiet

Die Erfindung bezieht sich auf ein Sensorsystem mit wenigstens einem Sensor zur Erzeugung wenigstens eines Sensorsignal, das von einer sensorisch erfassbaren Zustandsgröße abhängig ist. Ferner werden ein Netzwerk mit dem wenigstens einen Sensorsystem sowie ein Verfahren zum Betrieb des Sensors beschrieben.

### Stand der Technik

Industrielle Prozessketten, Fertigungslinien und der Betrieb von technischen Anlagen, bspw. Fahrzeugen, unterliegen einer strengen Überwachung u.a. bzgl. Sicherheit, Qualität, Zuverlässigkeit und Wartungsaspekten. Dies wird durch unterschiedliche Sensoriken realisiert, durch die reale Zustände bzw. Zustandsgrößen sensorisch erfasst und in sensorspezifische Signale umgewandelt bzw. abgebildet werden, die einer nachfolgenden Signalauswertung und -bewertung unterzogen werden. Je nach Überwachungsaufgaben und Anforderungen werden die Sensorsignale und/oder davon abgeleitete Messdaten direkt in einer Datenbank, bspw. in Cloud-basierte Computer- und Speicherressourcen, für eine späteren Verarbeitung und Nutzung gespeichert oder einer direkten, d.h. inline-Nutzung zugeführt, um Echtzeit-Anzeigen von Events zu realisieren, bspw. in Form von Fehleranzeigen oder Wartungsindikationen etc., oder durch Sensorsignal-gestützte aktorische Maßnahmen unmittelbaren Einfluss auf die jeweils Sensor-überwachten Prozesse und Zustände nehmen zu können.

Der Einsatz von Sensoren in einem technischen Umfeld bedarf einer fach- und sachgerechten Installation und betrieblichen Einrichtung der Sensoren, um die Überwachungsfunktion bestmöglich vornehmen zu können. Notwendige Anpassungen oder Änderungen von Parametrisierungen von Sensoren werden zumeist händisch, meist von Systemexperten, vorgenommen, um bspw. auf zeitliche Variationen im Sensorbetrieb reagieren zu können.

Die Druckschrift DE 10 2018 122 411 A1 offenbart ein Verfahren zur Verbesserung der Messperformance von Sensoren zur Erfassung gasförmiger, flüssiger und/oder fester Medien, wobei die Sensoren physikalische oder chemische Prozessgrößen unter Verwendung eines Messalgorithmus' bestimmen oder überwachen sowie mit spezifischen Kalibrierdaten kalibriert werden. Der Messalgorithmus wird auf der Grundlage von aktuell gemessenen Sensordaten einer zuvor ausgewählten Gruppe von Sensoren aktualisiert und an alle Sensoren übertragen.

Die Druckschrift DE 10 2016 202 569 A1 offenbart ein Verfahren zur Adaption eines zumindest einen Sensor umfassenden Sensorsystems eines Fahrzeugs an ein durch das Sensorsystem erfasstes Umfeld, bei dem die folgenden Verfahrensschritte durchgeführt werden: Erkennen einer vorgegebenen Umfelderfassungssituation mit Mitteln des Fahrzeugs; Ermitteln einer Steuerungsinformation zum Ansteuern des Sensorsystems des Fahrzeugs in Abhängigkeit von der erkannten, vorgegebenen Umfelderfassungssituation; und Ansteuern des Sensorsystems des Fahrzeugs derart, dass die im Zusammenhang mit der erkannten Umfelderfassungssituation erfassten Messwerte zumindest eines der Sensoren und/oder aus den Messwerten eines oder mehrerer Sensoren des Sensorsystems ermittelte Daten zum Betreiben zumindest einer Fahrzeugfunktion zumindest teilweise korrigiert werden.

Die Druckschrift US 8 615 374 B1 offenbart ein modular konfigurierbares, Sensorsystem, das aus einer Vielzahl in Datenaustausch stehenden Sensormodulen besteht, dessen Zweck einer gezielten Probenentnahme vor Ort dient.

Die Druckschrift US 2016/0142160 A1 beschreibt ein Umweltsensorsystem umfassend eine Vielzahl von Sensorclustern, die jeweils über eine Vielzahl von Sensoren verfügen, die für eine bidirektionale Datenübertragung über einen Sensorkoppler verbunden sind. Die Sensorcluster sind mit einem Kalibrierungskoordinator verbunden, in dem die Sensorsignale von allen Sensorclustern verarbeitet werden, um mindestens ein Ergebnis zu erhalten, das an die Sensorcluster zurückgeleitet wird, die dann die Zuverlässigkeit und Genauigkeit der Sensoren bewerten. In Abhängigkeit von dieser Bewertung kann der Sensorkoppler einzelne Sensoren, als unzuverlässig einstufen, kalibrieren, außer Betrieb nehmen oder ersetzen.

Die Druckschrift DE 10 2014 204 631 A1 offenbart ein System zur Fehlererkennung von fehlerhaften Messdaten einer Sensoreinheit in einem Sensornetzwerk und zur Kalibration dieser Sensoreinheit. Die Vorrichtung weist ein erstes Mittel auf, welches dazu eingerichtet, wenigstens erste Messdaten einer ersten Sensoreinheit und/oder zweite Messdaten einer zweiten Sensoreinheit zu empfangen und die ersten Messdaten und/oder die zweiten Messdaten miteinander zu vergleichen. Das erste Mittel ist zudem dazu eingerichtet, in Abhängigkeit des Vergleichs zu erkennen, ob fehlerhafte Messdaten vorliegen. Hierzu ist das erste Mittel dazu eingerichtet, wenigstens erste Betriebsparameter der ersten Sensoreinheit oder auch zweite Betriebsparameter der zweiten Sensoreinheit, insbesondere die letzten Kalibrierungszeitpunkte, die Sensorprinzipien, die Sensorpositionen und/oder Einstellparameter, zu empfangen und diese empfangenen Betriebsparameter in den Vergleich einfließen zu lassen. Durch Berücksichtigen der Betriebsparameter in dem Vergleich kann erkannt werden, ob fehlerhafte Messdaten vorliegen. Dies funktioniert zudem auch dann, wenn beispielsweise die Sensorpositionen der Sensoreinheiten unterschiedlich sind. Des Weiteren ist es möglich, die Messdaten von nur einer Sensoreinheit miteinander zu vergleichen und zu erkennen, ob die Messwerterfassung sich fehlerhaft verändert hat.

Die Druckschrift DE 103 30 251 A1 offenbart ein Verfahren und eine Vorrichtung, mit dessen Hilfe eine Messwertaufnahme mittels wenigstens eines Sensors und eines wenigstens den einen Sensor steuernden Steuergeräts stattfindet. Dabei erfasst der Sensor Messgrößen und leitet die so erfassten Messgrößen an das separate, vom Sensor baulich getrennte Steuergerät weiter, wobei der Sensor in Abhängigkeit von den im Steuergerät erfassten Messgrößen angesteuert wird.

### Darstellung der Erfindung

Der Erfindung liegt die Aufgabe zugrunde ein Netzwerk mit wenigstens zwei in gegenseitigem Datenaustausch stehenden Sensorsystemen, die jeweils wenigstens einen Sensor zur Erzeugung wenigstens eines Sensorsignal vorsehen, das jeweils von einer sensorisch erfassbaren Zustandsgröße abhängig ist, und über ein Mittel zur bidirektionalen Übertragung des wenigstens einen Sensorsignals pro Sensorsystem zu einem Rechner-gestützten Sensorknoten verbunden sind, der Teil des Netzwerkes ist und in dem eine Sensorsignalauswertung zum Erhalt wenigstens eines Auswerteergebnisses sowie eine Ermittlung wenigstens eines Steuersignals auf Basis des Auswerteergebnisses erfolgt, das das Mittel an den wenigstens einen Sensor pro Sensorsystem zu dessen Sensorbetrieb überträgt, derart weiterzubilden und anzugeben, so dass sich das Netzwerk an Sensorsystemen möglichst autonom an eine individuelle Messsituation anzupassen vermag, ohne die Notwendigkeit einer kosten- und zeitaufwändigen Sensoreinstellung durch eine Fachkraft, mit dem Ziel die Messsituation möglichst optimal sensorisch zu erfassen und auf sich einstellende Änderungen situativ selbstständig zu reagieren.

Die Lösung der der Erfindung zugrunde liegenden Aufgabe ist im Anspruch 1 angegeben. Ferner ist im Anspruch 9 ein Verfahren zum Betrieb des Netzwerkes erläutert. Den Erfindungsgedanken in vorteilhafter Weise weiterbildende Merkmale sind Gegenstand der Unteransprüche sowie der weiteren Beschreibung, insbesondere unter Bezugnahme auf die Ausführungsbeispiele zu entnehmen.

Das lösungsgemäße Netzwerk mit wenigstens zwei in gegenseitigem Datenaustausch stehenden Sensorsystemen, die jeweils wenigstens einen Sensor zur Erzeugung wenigstens eines Sensorsignal vorsehen, das jeweils von einer sensorisch erfassbaren Zustandsgröße abhängig ist, und über ein Mittel zur bidirektionalen Übertragung des wenigstens einen Sensorsignals pro Sensorsystem zu einem Rechner-gestützten Sensorknoten verbunden sind, der Teil des Netzwerkes ist und in dem eine Sensorsignalauswertung zum Erhalt wenigstens eines Auswerteergebnisses sowie eine Ermittlung wenigstens eines Steuersignals auf Basis des Auswerteergebnisses erfolgt, das das Mittel an den wenigstens einen Sensor pro Sensorsystem zu dessen Sensorbetrieb überträgt, zeichnet sich derart aus, dass der Rechner-gestützte Sensorknoten mit einem Datenspeicher in Datenaustausch steht, in den das wenigstens eine Sensorsignal oder Auswerteergebnis und/oder eine davon abgeleitete Information sowie das wenigstens eine Steuersignal und/oder eine davon abgeleitete Information abspeicherbar und abrufbar sind und der Datenspeicher in Art einer Wissensdatenbank ausgebildet und mit Expertenwissen bestückt ist, und
dass die Sensorsignalauswertung wissensbasiert erfolgt.

Das Mittel zur bidirektionalen Übertragung von Daten bzw. Informationen ist je nach Systemanforderungen kabellos oder kabelgebunden ausführbar. Eine kabelgebundene Ausbildung des Übertragungsmittels erleichtert neben einer störungsfreien Informationsübertragung vor allem die für den Sensorbetrieb erforderliche elektrische Energieversorgung.

In vorteilhafter Weise verfügt der Rechner-gestützte Sensorknoten über ein neuronales Netzwerk, in dem die wissensbasierte Signalauswertung zum Erhalt des wenigstens einen Auswerteergebnisses nach dem Prinzip des autonomen Lernens erfolgt. Das Prinzip des autonomen Lernens setzt den Zugriff auf Expertenwissen voraus, auf dessen Grundlage die von dem wenigstens einen Sensor herrührenden Sensorsignale qualifiziert ausgewertet bzw. bewertet werden mit dem Ziel einer selbst optimierenden Sensorbetriebsweise.

In einer Ausführungsvariante weist der wenigstens eine Rechner-gestützte Sensorknoten einen lokalen Speicher auf, in dem Expertenwissen zumindest in einem Maße abgespeichert ist, das zumindest eine Teilevaluierung der Sensorsignale des Sensors ermöglicht, die zu einem Auswerteergebnis führt, auf dessen Grundlage ein den Sensor optimiertes Ansteuersignal generiert wird.

Der mit dem Sensorknoten in Datenaustausch stehende Datenspeicher ist in Art einer Wissensdatenbank ausgebildet, die initial mit Expertenwissen bestückt ist, dessen Umfang innerhalb des separaten Datenspeichers zusätzlich zu den vorstehend über den Rechner-gestützten Sensorknoten übertragenen Daten und Informationen über wenigstens eine Schnittstelle dynamisch erweiterbar ist.

Durch Zugriff des Rechner-gestützten Sensorknotens auf das sich dynamisch stets erweiternde Expertenwissen sowohl innerhalb des lokalen Speichers am Sensorknoten, als auch im separaten Datenspeicher, gewinnt das Sensorsystem Schritt für Schritt an "Intelligenz".

Die in den einzelnen Sensorsystemen enthaltenen Sensoren sind vorzugsweise als parametrisierbare Sensoren ausgebildet d.h. die Sensoren sind nicht nur durch eine bloße Ein- und Ausschaltefunktion betreibbar, wie es bei sogenannten "On-Off-Sensoren" der Fall ist, sondern verfügen über unterschiedliche Sensorbetriebsmodi, in denen ein Sensor durch Ansteuerung mit sensorspezifischen Steuersignalen sowie in Abhängigkeit eines vorgebbaren Detektionsziels betreibbar sind.

Derartige parametrisierbare Sensoren vermögen ihre Sensorbetriebsweise unter Nutzung des lösungsgemäßen Netzwerkes autonom und in selbstlernender Weise durch Nutzung von in der Wissensdatenbank abgespeicherten bzw. bevorrateten Expertenwissen sowie der kontinuierlichen Überwachung und Evaluierung der sensorspezifischen Sensorsignale selbständig an eine sensorspezifische Messaufgabe anzupassen.

In einer weiteren bevorzugten Ausführungsform sind wenigstens zwei Sensoren beliebiger Art, d.h. "On-Off-Sensoren" und/oder parametrisierbare Sensoren, jeweils mit einem Rechner-gestützten Sensorknoten über das Mittel zur bidirektionalen Datenübertragung verbunden, in dem die Sensorsignale der wenigstens zwei Sensoren der wissensbasierten Sensorsignalauswertung zum Erhalt wenigstens eines Auswerteergebnisses unterzogen werden und in dem für die Ansteuerung der wenigstens zwei Sensoren jeweils ein sensorspezifisches Steuersignal auf Basis des Auswerteergebnisses erzeugt wird, wobei die jeweils erzeugten sensorspezifischen Steuersignale über das Mittel zur bidirektionalen Übertragung an den jeweiligen Sensor zu dessen Sensorbetrieb übertragen werden.

Durch die Verknüpfung wenigstens zweier Sensoren, vorzugsweise mehrerer Sensoren, mit ein und demselben Rechner-gestützten Sensorknoten ist nicht nur eine Datenfusion sowie Vorauswertung der sensorspezifischen Sensorsignale innerhalb des Rechner-gestützten Sensorknotens möglich, sondern überdies erfolgt eine bidirektionale Kommunikation zwischen den einzelnen Sensoren, die nicht nur die Abfrage bezüglich der gegenseitigen Funktionsfähigkeit im Sinne einer Selbstüberwachung ermöglicht, sondern zudem einen Abgleich sämtlicher bisher sensorisch erfassten Sensorsignale ermöglicht, um eine etwaige Parametrierung und/oder Einstellung sämtlicher mit dem Rechner-gestützten Sensorknoten verbundenen Sensoren im Sinne eines Erfahrungswissens, wie beispielsweise durch einen Experten, zu aktualisieren.

In einer bevorzugten Ausführungsform steht ein erster Rechner-gestützter Sensorknoten mit einer Anzahl n von Sensorsystemen und wenigstens ein zweiter Rechner-gestützter Sensorknoten mit einer Anzahl m von Sensorsystemen über jeweils das Mittel zur bidirektionalen Übertragung von Daten in Kommunikationsaustausch. Nicht notwendigerweise müssen die Anzahl n und m identisch sein.

Die im Netzwerk mittels bidirektionaler Datenkommunikation verbundenen Rechner-gestützten Sensorknoten stehen allesamt gleichfalls im bidirektionalen Datenaustausch mit einer Wissensdatenbank, die auf einem Datenspeicher abgespeichert bzw. bevorratet ist und mit Expertenwissen bestückt ist, das durch den bidirektionalen Datenaustausch dynamisch erweiterbar ist.

Sämtliche Rechner-gestützte Sensorknoten, die mit der Wissensdatenbank kommunizieren, bilden ein neuronales Netzwerk und vermögen aufgrund des kontinuierlichen Informations- und Datenaustausches mit der Wissensdatenbank Änderungen in Bezug auf die sensorisch erfassten Zustandsgrößen sowie auch darauf gerichtete Anpassungen des jeweiligen Sensorbetriebes zu erfassen und in der Wissensdatenbank abzuspeichern, wodurch sich dessen Wissensumfang dynamisch erweitert, d.h. das selbstlernende Sensorsystem wird durch das sich ständig erweiternde Expertenwissen Schritt für Schritt intelligenter.

Im gleichen Maße, in dem der Umfang an Expertenwissen auf dem mit sämtlichen Rechner-gestützten Sensorknoten verbundenen, separaten Datenspeicher zunimmt, erweitert sich das lokal auf den jeweiligen Rechner-gestützten Sensorknoten abgespeicherte Expertenwissen ebenfalls, das vorzugsweise unter Maßgabe sensorspezifischer Kriterien auf jeden der einzelnen Rechner-gestützten Sensorknoten individuell ausgewählt und bevorratet wird.

Ziel ist es, durch intelligentes Nutzen der im Sensorbetrieb generierten Sensorsignale und den darin enthaltenen Informationen einen vollkommen autarken Betrieb des Sensorsystems bzw. des aus wenigstens zwei, in gegenseitigem Datenaustausch stehenden Sensorsystemen bestehenden Netzwerks zu ermöglichen und dies mit einer sowohl lokal an jedem einzelnen Rechner-gestützten Sensorknoten sowie auch einer global, d.h. innerhalb des Netzwerkverbundes zu verortenden, wachsenden Lernkurve. Hinzu kommt die mit sämtlichen Rechner-gestützten Sensorknoten verbundene Wissensdatenbank, deren Experten- bzw. Erfahrungswissensumfang stetig und dynamisch zunimmt und als Wissensbasis für den Betrieb des Sensorsystems dient. So kann das Netzwerk als in sich geschlossenes, autark und autonom arbeitendes Sensorsystem bzw. Sensornetzwerk angesehen werden, das über Schnittstellen verfügt, um den Erfahrungs- und Wissensumfang ständig zu erweitern.

Dem lösungsgemäßen Netzwerk liegt das verfahrenstechnische Grundprinzip zugrunde, dass wenigstens ein Sensorsignal in Abhängigkeit einer sensorisch erfassbaren Zustandsgröße erzeugt wird, das einer wissensbasierten Signalauswertung unterzogen wird, die zu einem Auswerteergebnis führt, das der Erzeugung eines Steuersignals zugrunde gelegt wird, das als Feedback-Steuersignal zum Betrieb des Sensors zugrunde gelegt wird.

Im Rahmen der wissensbasierten Signalauswertung wird das Sensorsignal unter Zugrundelegung eines sich dynamisch erweiternden Expertenwissens nach dem Prinzip des autonomen Lernens evaluiert, d.h. ausgewertet und bewertet. Das in einer Wissensdatenbank bevorratete Expertenwissen wird durch Abspeichern des Sensorsignals oder des Auswerteergebnisses und/oder eine davon abgeleitete Information sowie des wenigstens einen Sensorsignals und/oder einer davon abgeleiteten Information in der Wissensdatenbank dynamisch erweitert. Im Falle wenigstens zweier Sensoren, die in Abhängigkeit einer Zustandsgröße jeweils ein Sensorsignal erzeugen, werden diese ebenfalls gemeinsam der wissensbasierten Signalauswertung unterzogen um im Ergebnis wenigstens ein Auswerteergebnis zu erhalten, das zur Erzeugung jeweils eines Steuersignals dient, das an die wenigstens zwei Sensoren zu deren Betrieb übermittelt wird.

In vorteilhafter Weise wird eine Vielzahl von Sensoren im Rahmen eines selbstlernenden Netzwerkbetriebes verwendet, von denen eine erste Gruppe von Sensoren eine Zustandsgröße sensorisch erfasst und jeweils sensorspezifische Sensorsignale erzeugt, die zum Zwecke einer wissensbasierten Signalauswertung an einen ersten Rechner-gestützten Sensorknoten übertragen werden. Zudem erfassen zu wenigstens einer zweiten Gruppe zusammengefasste Sensoren jeweils eine Zustandsgröße sensorisch und erzeugen hierzu sensorspezifische Sensorsignale, die zum Zwecke einer wissensbasierten Signalauswertung an einen zweiten Rechner-gestützten Sensorknoten übertragen werden. Zwischen den wenigstens zwei Rechner-gesteuerten Sensorknoten werden Informationen ausgetauscht, die jeweils zum Erhalt wenigstens eines Auswerteergebnisses sowie zur Erzeugung der sensorspezifischen Steuersignale dienen. Auf diese Weise kann eine Vielzahl unterschiedlicher Sensoren hinsichtlich ihrer Art und ihrer räumlichen Positionierung um eine sensorüberwachte Zone, innerhalb der es gilt, wenigstens eine reale Zustandsgröße sensorisch zu erfassen, aufeinander abgestimmt optimiert, d.h. in selbstlernender Weise, betrieben werden.

### Kurze Beschreibung der Erfindung

Die Erfindung wird nachstehend ohne Beschränkung des allgemeinen Erfindungsgedankens anhand von Ausführungsbeispielen unter Bezugnahme auf die Zeichnungen exemplarisch beschrieben. Es zeigen:
- Fig. 1: Verknüpfungsanordnung mehrerer Sensoren sowie mehreren Rechnergestützten Sensorknoten sowie
- Fig. 2: Darstellung eines Netzwerkes mit einer Vielzahl in gegenseitigem Datenaustausch stehenden Sensorsystemen.

### Wege zur Ausführung der Erfindung, gewerbliche Verwendbarkeit

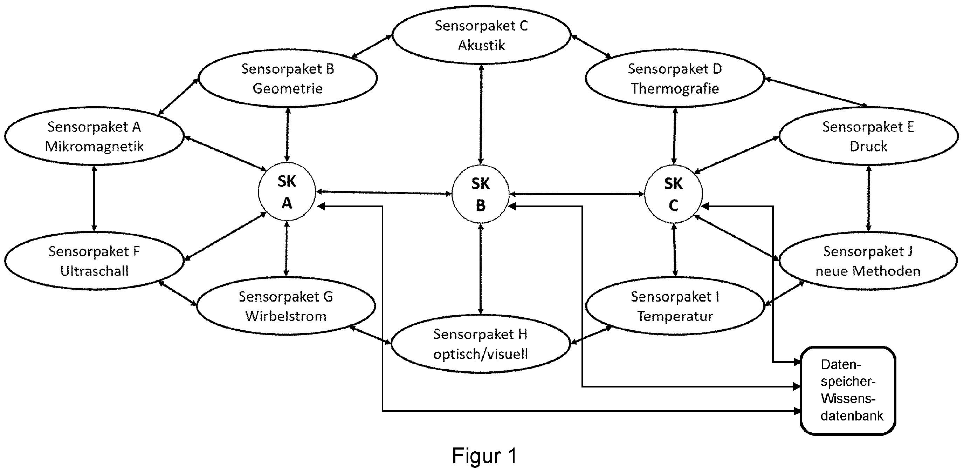

Figur 1 zeigt eine Verknüpfung zwischen einer Vielzahl einzelner Sensorpakete A bis J, die jeweils wenigstens einen Sensor gleicher Art umfassen, beispielsweise umfasst das Sensorpaket A wenigstens einen mikromagnetischen Sensor, beispielsweise in Form eines Magneto-induktiven Abstandssensors. Das Sensorpaket B verfügt über die räumliche Geometrie von Objekten und Gegenständen erfassende Sensoren, beispielsweise in Form von 3D-Scanner-Systemen oder stationären, optischen 3D-Geometrie-Sensoren oder Stereo-Bildaufnahme-Systeme. Das Sensorpaket C verfügt über wenigstens einen akustischen Sensor, beispielsweise in Form eines Mikro- oder Hydrofons oder eines Schallpegelmessers. Das Sensorpaket D verfügt über wenigstens einen Thermografie-Sensor, beispielsweise in Form eine IR-Kamera. Das Sensorpaket E umfasst wenigstens einen Drucksensor, beispielsweise in Form einer Druckdose oder eines kapazitiven, induktiven oder magnetischen Drucksensor etc.. Das Sensorpaket F umfasst wenigstens einen Ultraschallsensor, beispielsweise in Form eines piezoelektrischen Sensors. Das Sensorpaket G umfasst wenigstens einen Wirbelstromsensor, das Sensorpaket H umfasst wenigstens einen optischen bzw. visuellen Sensor, beispielsweise in Form einer Kamera. Das Sensorpaket I umfasst wenigstens einen Temperatursensor, beispielsweise in Form eines Bimetall-Sensors, Heiß- oder Kaltleiters, Temperatur-abhängige Messwiderstände etc.. Selbstverständlich sind auch weitere Sensoren neuerer Art denkbar, die im Sensorpaket J zusammengefasst sind. Alle einzelnen, zu den vorstehend beschriebenen Sensorpaketen A bis J zugehörigen Sensoren sind jeweils mit einem Rechner-gestützten Sensorknoten SK-A, SK-B sowie SK-C über einen kabellosen oder kabelgebundenen bidirektionalen Datenübertragungskanal verbunden.

Zudem stehen sämtliche zu den jeweiligen Sensorpaketen A bis J zugehörige Sensoren in unmittelbarem gegenseitigem bidirektionalen Datenaustausch, d.h. ohne Zwischenschaltung jedweder Rechner-gestützter Sensorknoten SK-A, SK-B, SK-C. Letzteres gilt insbesondere in Fällen, in denen die einzelnen Sensoren über eine eigene intelligente Rechnerstruktur mit einer lokalen Speichereinheit verfügen.

Alle drei dargestellten Rechner-gestützten Sensorknoten SK-A, SK-B, SK-C sind über einen bidirektionalen Kommunikationskanal mit einem separaten Datenspeicher in Form einer Wissensdatenbank verbunden.

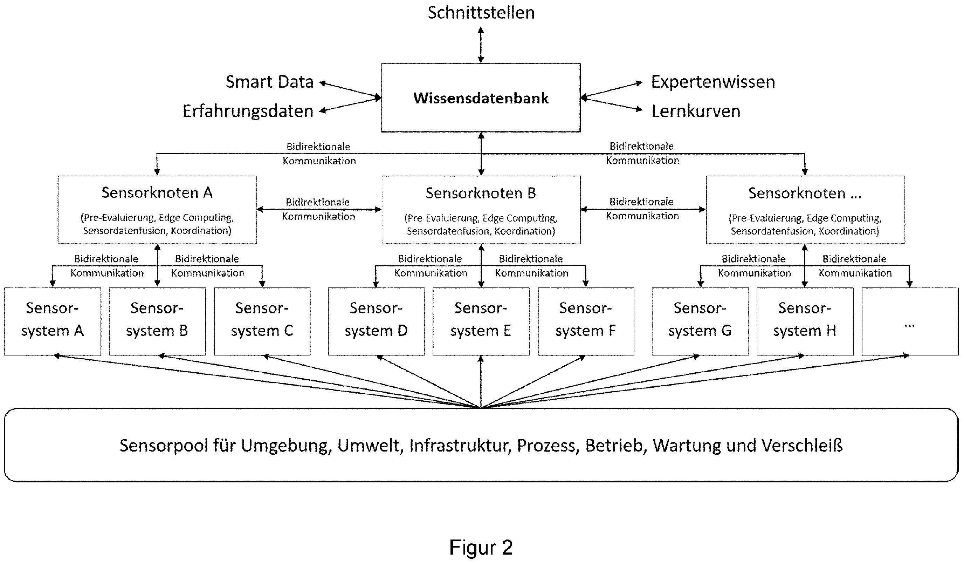

Figur 2 zeigt schematisiert eine Netzwerkstruktur mit einer Vielzahl unterschiedlicher Sensoren, siehe Sensorpool, die geeignet sind, reale Zustandsgrößen aus der Umgebung bzw. Umwelt, von bestehenden Infrastrukturen, von Prozessen oder Prozessabläufen, von Betriebszuständen, von Verschleißzuständen und damit verbundenen Wartungserfordernissen etc. zu erfassen. Die einzelnen innerhalb eines Sensorpools zusammengefassten Sensoren lassen sich art- bzw. typgerecht gruppieren und zu sogenannten Sensorsystemen A bis H etc. zusammenfassen. Die einzelnen Sensorsysteme A bis H etc. weisen jeweils wenigstens einen Sensor auf, der über einen Prozessor gesteuerten lokalen Speicher verfügt und über einen bidirektionalen Kommunikationskanal sowohl mit einem Rechner-gestützten Sensorknoten A, B, C etc., als auch mit ausgewählten Sensorsystemen B, C etc. verbunden ist. Die einzelnen Sensorknoten A, B, C etc. ihrerseits kommunizieren über bidirektionale Kommunikationskanäle untereinander und tauschen darüber hinaus Daten mit einer separaten Wissensdatenbank aus, in der Expertenwissen bevorratet bzw. abgespeichert ist, das dynamisch angereichert wird. Die Anreicherung an Expertenwissen erfolgt zum einen über den Daten- und Informationsaustausch seitens der Sensorknoten A, B etc. sowie auch über weitere Schnittstellen, über die Erfahrungsdaten, Smartdata oder weitere den Sensorprozess optimierende Informationen übertragen werden können.

Ein Anwendungsbeispiel für das neuartige Sensorsystem sei im Folgenden anhand einer Presse für die Warmumformung erläutert:
Bei der Herstellung von warmumgeformten Bauteilen bildet der Pressvorgang den wichtigsten und wesensbestimmenden Prozessschritt in der gesamten Herstellungskette. Die für den Pressvorgang aufgeheizten Bauteile, sogenannte Blanks, werden über ihre Austentisierungstemperatur erhitzt und mittels eines Handlings-Systems in ein Presswerkzeug eingelegt. Eine homogene Erwärmung des Blanks ist von entscheidender Bedeutung für die Gewährleistung einer gleichbleibenden Qualität über das gesamte Umformbauteil im Nachgang zum Pressprozessschritt. Zur Gewährleistung und Kontrolle einer sich innerhalb des Bauteils ausbildenden homogenen Temperaturverteilung werden Thermografie-Kameras eingesetzt, um das aufgeheizte Blank gesamtheitlich vor dem Pressvorgang zu inspizieren. Während und nach dem Umform- und dem sich daran anschließenden Härtungsprozess innerhalb des Presswerkzeuges stehen unterschiedliche, für die Überprüfung der Materialeigenschaften geeignete Sensoriken zur Verfügung. Eine zuverlässige und komfortable Möglichkeit stellt in diesem Zusammenhang das sogenannte 3MA-System dar, eine Abkürzung für "mikromagnetische Multiparameter-, Mikrostruktur- und Spannungs-Analyse. 3MA-Prüfsysteme messen in Sekundenbruchteilen wie weich bzw. hartmagnetisch ein Werkstoff ist. Darüber hinaus wird eine Vielzahl weiterer magnetischer Kenngrößen ermittelt, die unterschiedliche Werkstoffeigenschaften, wie Eigen- und Lastspannungen etc. widerspiegeln. Weitere Einzelheiten können hierzu der einschlägigen Fachliteratur entnommen werden.

Durch die signaltechnische Verknüpfung der beiden vorstehenden Sensorsysteme, d.h. Thermografie-Kamera(s) und 3MA-System, über einen gemeinsamen Sensorknoten sowie den Zugriff auf eine mit Expertenwissen angereicherte Wissensdatenbank können sich beide Sensorsysteme gegenseitig dahingehend optimieren, so dass die Thermografie-Kamera einerseits auffällige Werkstoffbereiche mit zu hoher oder zu niedriger Temperatur im aufgeheizten Blank direkt an das 3MA-System übermittelt, wodurch das 3MA-Sensorsystem eine zielgerichtete Erweiterung der Messstellenverteilung durchführen kann.

Im Umkehrschluss vermag das 3MA-Sensorsystem an das Thermosystem Feedback-Informationen zu übermitteln, ob und inwiefern die von Seiten der Thermografie-Kamera gemeldeten Auffälligkeiten zu einer qualitätsrelevanten Veränderung der Materialeigenschaften geführt hat. Mit zunehmender Messdauer und Praxis werden aufgrund detektierter Auffälligkeiten die Messstellenverteilung für die Prüfung der Qualität erweitert und die thermografischen Fokuspunkte der Thermokamera angepasst bzw. erweitert. Derartige Anpassungen erfolgen lösungsgemäß selbständig mittels innerhalb des wenigstens einen Rechner-gestützten Sensorknotens anwendbarer Optimierungsalgorithmen, so dass sich die Betriebseigenschaften der an der Überwachung beteiligten Sensoren mit zunehmender Messdauer eigenständig in sich selbst optimierender Weise an die Messaufgabe anpassen.

Mit dem Sensorsystem lassen sich autark kritische Positionen für jedes Werkzeug und Bauteil eruieren und notwendige Messpositionen automatisch anpassen bzw. erweitern. Sämtliche während des Sensorbetriebs gewonnenen Daten und Informationen werden als zusätzliches Expertenwissen in der separaten Datenbank gespeichert und stehen für den weiteren Sensorbetrieb sowie auch dem Aufbau weiterer Sensorsysteme als Wissensbasis zur Verfügung.

Das Prinzip des selbständigen Lernens und Optimierens kann auf beliebige Netzwerke und Sensorsysteme angewandt und übertragen werden. Dabei ist es unerheblich, ob die Sensorsysteme bereits im Betrieb sind oder von Grund auf neu aufgebaut werden. Auch die Erweiterung durch weitere Sensorsysteme ist ohne Weiteres möglich und verhilft dem bestehenden Sensorsystem zu einer schnelleren und umfassenderen Lernkurve.

Besonders vorteilhaft eignet sich der Einsatz des Sensornetzwerkes zur Überwachung bzw. sensoriellen Erfassung der folgenden Szenarien:
- Sensorielle Erfassung von Objekten oder Prozessen, die schwankenden Umwelteinflüssen ausgesetzt sind, wie beispielsweise Änderungen der Luftfeuchtigkeit, des Luftdruckes, der Umgebungstemperatur, der Emissionen und/oder der Luftqualität.
- Veränderliche Infrastrukturen, beispielsweise bauliche Erweiterungen von Gebäuden und Produktionshallen, Veränderungen sowie Erweiterungen eines Maschinenparks, Neuinstallation von Fertigungslinien, Veränderungen an der Bodenbeschaffenheit sowie eines Gebäudekomplexes.
- Veränderliche Prozess- und Produktionslinien, beispielsweise bedingt durch Schwankungen von Eingangsmaterialien sowie bei Veränderungen der Maschinencharakteristik, beispielsweise bedingt durch Abnutzung, Verschleiß, Taktzeitvariation, Produktionsgeschwindigkeit, Lebensdauerzyklen etc..

## Patentansprüche

1. Netzwerk mit wenigstens zwei in gegenseitigem Datenaustausch stehenden Sensorsystemen, die jeweils wenigstens einen Sensor zur Erzeugung wenigstens eines Sensorsignal vorsehen, das jeweils von einer sensorisch erfassbaren Zustandsgröße abhängig ist, und über ein Mittel zur bidirektionalen Übertragung des wenigstens einen Sensorsignals pro Sensorsystem zu einem Rechner-gestützten Sensorknoten verbunden sind, der Teil des Netzwerkes ist und in dem eine Sensorsignalauswertung zum Erhalt wenigstens eines Auswerteergebnisses sowie eine Ermittlung wenigstens eines Steuersignals auf Basis des Auswerteergebnisses erfolgt, das das Mittel an den wenigstens einen Sensor pro Sensorsystem zu dessen Sensorbetrieb überträgt,
**dadurch gekennzeichnet, dass** der Rechner-gestützte Sensorknoten mit einem Datenspeicher in Datenaustausch steht, in den das wenigstens eine Sensorsignal oder Auswerteergebnis und/oder eine davon abgeleitete Information sowie das wenigstens eine Steuersignal und/oder eine davon abgeleitete Information abspeicherbar und abrufbar sind und der Datenspeicher in Art einer Wissensdatenbank ausgebildet und mit Expertenwissen bestückt ist, und
dass die Sensorsignalauswertung wissensbasiert erfolgt.

2. Netzwerk nach Anspruch 1,
**dadurch gekennzeichnet, dass** der Datenspeicher über wenigstens eine Schnittstelle verfügt, über die der Umfang des abgespeicherten Expertenwissens dynamisch erweiterbar ist.

3. Netzwerk nach Anspruch 1 oder 2,
**dadurch gekennzeichnet, dass** der Rechner-gestützte-Sensorknoten über einen lokalen Speicher verfügt, in dem wenigstens ein Teil von Expertenwissen abgespeichert ist.

4. Netzwerk nach einem der Ansprüche 1 bis 3,
**dadurch gekennzeichnet, dass** der Rechner-gestützte-Sensorknoten ein neuronales Netzwerk aufweist, in dem die wissensbasierte Sensorsignalauswertung zum Erhalt des wenigstens einen Auswerteergebnisses nach dem Prinzip des autonomen Lernens erfolgt.

5. Netzwerk nach einem der Ansprüche 1 bis 4,
**dadurch gekennzeichnet, dass** der wenigstens eine Sensor pro Sensorsystem über einen Prozessor-gesteuerten lokalen Speicher verfügt.

6. Netzwerk nach Anspruch 4,
**dadurch gekennzeichnet, dass** der wenigstens eine Sensor eines Sensorsystems mit wenigstens einem Sensor eines anderen Sensorsystems über ein Mittel zur bidirektionalen Übertragung von Daten in Kommunikation stehen.

7. Netzwerk nach einem der Ansprüche 1 bis 6,
**dadurch gekennzeichnet, dass** ein erster Rechner-gestützter Sensorknoten mit einer Anzahl n von Sensorsystemen und wenigstens ein zweiter Rechner-gestützter Sensorknoten mit einer Anzahl m von Sensorsystemen über jeweils das Mittel zur bidirektionalen Übertragung von Daten in Kommunikation stehen.

8. Netzwerk nach einem der Ansprüche 1 bis 7,
**dadurch gekennzeichnet, dass** der wenigstens eine Sensor pro Sensorsystem ein parametrisierbarer Sensor ist, der in wenigstens zwei unterschiedlichen Sensorbetriebsarten betreibbar ist, und
dass das Steuersignal die Einstellung eines Sensorbetriebsparameters umfasst.

9. Verfahren zum Betrieb wenigstens eines Sensors in einem Netzwerk nach einem der Ansprüche 1 bis 8, der in Abhängigkeit einer sensorisch erfassbaren Zustandsgröße ein Sensorsignal erzeugt, das einer wissensbasierten Signalauswertung unterzogen wird zum Erhalt eines Auswerteergebnisses, das zur Erzeugung wenigstens eines Steuersignals herangezogen wird, das dem Sensor zu dessen Betrieb übermittelt wird.
**dadurch gekennzeichnet, dass** im Rahmen der wissensbasierten Signalauswertung das Sensorsignal unter Zugrundelegung eines sich dynamisch erweiternden Expertenwissens nach dem Prinzip des autonomen Lernens evaluiert wird.

10. Verfahren nach Anspruch 9,
**dadurch gekennzeichnet, dass** das in einer Wissensdatenbank bevorratete Expertenwissen durch Abspeichern des Sensorsignals oder Auswerteergebnisses und/oder eine davon abgeleitete Information sowie das wenigstens eine Steuersignal und/oder eine davon abgeleitete Information in der Wissensdatenbank dynamisch erweitert wird.

11. Verfahren nach Anspruch 9 oder 10,
**dadurch gekennzeichnet, dass** wenigstens zwei Sensoren eine Zustandsgröße sensorisch erfassen und jeweils ein Sensorsignal erzeugen,
dass wenigstens ein Sensorsignal der erzeugten Sensorsignale der wissensbasierten Signalauswertung unterzogen wird zum Erhalt des wenigstens einen Auswerteergebnisses, das zur Erzeugung wenigstens eines Steuersignals dient, das an wenigstens einen der wenigstens zwei Sensoren zur dessen Betrieb übermittelt wird.

12. Verfahren nach Anspruch 11,
**dadurch gekennzeichnet, dass** eine erste Gruppe von Sensoren eine Zustandsgröße sensorisch erfasst und jeweils sensorspezifische Sensorsignale erzeugt, die zum Zwecke einer wissensbasierten Signalauswertung an einen ersten Rechner-gestützten Sensorknoten übertragen werden,
dass eine zweite Gruppe von Sensoren die Zustandsgröße sensorisch erfasst und jeweils sensorspezifische Sensorsignale erzeugt, die zum Zwecke einer wissensbasierten Signalauswertung an einen zweiten Rechner-gestützten Sensorknoten übertragen werden, und dass zwischen dem ersten und zweiten Sensorknoten Informationen ausgetauscht werden, die jeweils zum Erhalt des wenigstens einen Auswerteergebnisses sowie zur Erzeugung wenigstens eines sensorspezifischen Steuersignals dienen.

13. Verfahren nach einem der Ansprüche 9 bis 12,
**dadurch gekennzeichnet, dass** der wenigstens eine Sensor unter Zugrundelegung des erzeugten Steuersignals betrieben wird und in Abhängigkeit der sensorisch erfassbaren Zustandsgröße ein weiteres Sensorsignal erzeugt, das als Feedback-Signal der wissensbasierten Signalauswertung unterzogen wird, im Rahmen dessen ein Steuersignal erzeugt wird, das zum Betrieb des Sensors dient.
